# EUROPEAN PATENT APPLICATION

(11) **EP 4 842 117 A1**
(43) Date of publication of application: **18.11.2026**
(21) Application number: 24916071.4
(22) Date of filing: 12.01.2024
(51) Int. Cl.: H04W 72/23

(54) **WIRELESS COMMUNICATION METHODS, TERMINAL DEVICES, AND NETWORK DEVICES**

(71) Applicant: GUANGDONG OPPO MOBILE TELECOMMUNICATIONS CORP., LTD., Dongguan, Guangdong 523860 (CN)
(72) Inventor: LU, Qianxi, Dongguan, Guangdong 523860 (CN); LENG, Bingxue, Dongguan, Guangdong 523860 (CN); FU, Zhe, Dongguan, Guangdong 523860 (CN); YU, Xinlei, Dongguan, Guangdong 523860 (CN)
(74) Representative: RGTH
(86) International application number: PCT/CN2024/072003
(87) International publication number: WO 2025/148002

(57) **Abstract**

Provided are wireless communication methods, terminal devices, and network devices. A communication method comprises: a terminal device receiving configuration information of a network device, wherein the configuration information comprises one or more of the following: first configuration information, which is used for configuring the correspondence between SSBs and RACH resources and in which the number of RACH resources corresponding to different SSBs is not entirely the same; and second configuration information, which is used for configuring paging resources.

## Description

### TECHNICAL FIELD

This application relates to the field of communications technologies, and more specifically, to a wireless communication method, a terminal device, and a network device.

### BACKGROUND

Random access channel (random access channel, RACH) resources are important communication resources in a communications system. However, currently, a design of RACH resources cannot meet a requirement of network energy saving (network energy saving, NES).

### SUMMARY

This application provides a wireless communication method, a terminal device, and a network device. Various aspects of this application are described below.

According to a first aspect, a wireless communication method is provided, and the method includes: receiving, by a terminal device, configuration information of a network device, where the configuration information includes one or more of the following: first configuration information, where the first configuration information is used to configure a correspondence between a synchronization signal block (synchronization signal block, SSB) and a RACH resource, and in the first configuration information, quantities of RACH resources corresponding to different SSBs are not exactly the same; and second configuration information, used to configure a paging resource.

According to a second aspect, a wireless communication method is provided, and the method includes: transmitting, by a network device, configuration information to a terminal device, where the configuration information includes one or more of the following: first configuration information, where the first configuration information is used to configure a correspondence between an SSB and a RACH resource, and in the first configuration information, quantities of RACH resources corresponding to different SSBs are not exactly the same; and second configuration information, used to configure a paging resource.

According to a third aspect, a terminal device is provided, and includes: a communications unit, configured to receive configuration information of a network device, where the configuration information includes one or more of the following: first configuration information, where the first configuration information is used to configure a correspondence between an SSB and a RACH resource, and in the first configuration information, quantities of RACH resources corresponding to different SSBs are not exactly the same; and second configuration information, used to configure a paging resource.

According to a fourth aspect, a network device is provided, and includes: a communications unit, configured to transmit configuration information to a terminal device, where the configuration information includes one or more of the following: first configuration information, where the first configuration information is used to configure a correspondence between an SSB and a RACH resource, and in the first configuration information, quantities of RACH resources corresponding to different SSBs are not exactly the same; and second configuration information, used to configure a paging resource.

According to a fifth aspect, a terminal device is provided, and the terminal device includes a transceiver, a memory, and a processor, where the memory is configured to store a program, and the processor is configured to invoke the program in the memory, and control the transceiver to receive or transmit a signal, to cause the terminal device to execute the method according to the first aspect.

According to a sixth aspect, a network device is provided, and the network device includes a transceiver, a memory, and a processor, where the memory is configured to store a program; and the processor is configured to invoke the program in the memory, and control the transceiver to receive or transmit a signal, to cause the network device to execute the method according to the second aspect.

According to a seventh aspect, an apparatus is provided, including a processor configured to invoke a program from a memory, to cause the apparatus to execute the method according to the first aspect or the second aspect.

According to an eighth aspect, a chip is provided, including a processor configured to invoke a program from a memory, to cause a device installed with the chip to execute the method according to the first aspect or the second aspect.

According to a ninth aspect, a computer-readable storage medium is provided, where the computer-readable storage medium stores a program, and the program causes a computer to execute the method according to the first aspect or the second aspect.

According to a tenth aspect, a computer program product is provided, including a program, where the program causes a computer to execute the method according to the first aspect or the second aspect.

According to an eleventh aspect, a computer program is provided, where the computer program causes a computer to execute the method according to the first aspect or the second aspect.

In embodiments of this application, configuration information related to a paging resource and a RACH resource is introduced. The first configuration information is used to configure a correspondence between an SSB and a RACH resource, so that quantities of RACH resources corresponding to different SSBs are not exactly the same. That is to say, in embodiments of this application, a non-uniform design manner (different SSBs correspond to different transmission directions) of the RACH resource in spatial domain is configured, thereby facilitating network energy saving.

### BRIEF DESCRIPTION OF DRAWINGS

FIG. 1 is an example diagram of a system architecture of a wireless communications system to which embodiments of this application are applicable.
FIG. 2 is an example diagram of a correspondence between an SSB and a RACH resource.
FIG. 3 is a schematic flowchart of a wireless communication method according to an embodiment of this application.
FIG. 4 is a schematic structural diagram of a terminal device according to an embodiment of this application.
FIG. 5 is a schematic structural diagram of a network device according to an embodiment of this application.
FIG. 6 is a schematic diagram of an apparatus to which embodiments of this application are applicable.

### DESCRIPTION OF EMBODIMENTS

Technical solutions in this application are described below with reference to the accompanying drawings.

### Wireless communications system

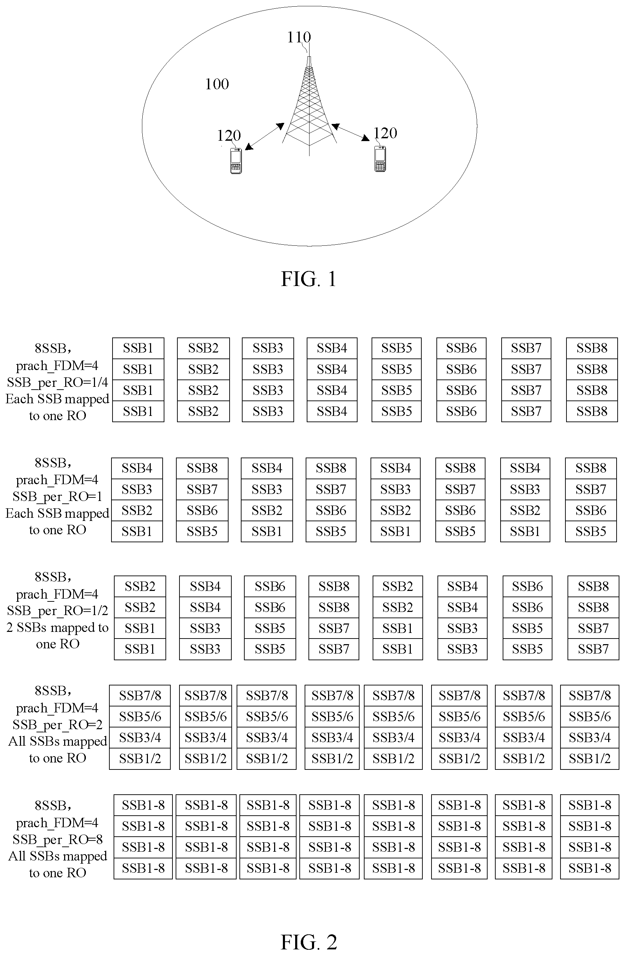

FIG. 1 is an example diagram of a system architecture of a wireless communications system 100 to which embodiments of this application are applicable. The wireless communications system 100 may include a network device 110 and a terminal device 120. The network device 110 may be a device that communicates with the terminal device 120. The network device 110 may provide coverage for a specific geographical area, and may communicate with the terminal device 120 located within the coverage. The terminal device 120 may access a network (such as a wireless network) by using the network device 110. Optionally, the wireless communications system 100 may further include another network entity such as a network controller or a mobility management entity, which is not limited in embodiments of this application.

It should be understood that the technical solutions in embodiments of this application may be applied to various communications systems, for example, a 5G system or a new radio (new radio, NR) system, a long term evolution (long term evolution, LTE) system, an LTE frequency division duplex (frequency division duplex, FDD) system, and an LTE time division duplex (time division duplex, TDD). The technical solutions provided in this application may further be applied to a future communications system, such as a 6th generation mobile communications system or a satellite communications system.

The terminal device in embodiments of this application may also be referred to as a user equipment (user equipment, UE), an access terminal, a user unit, a user station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the terminal device may be configured to function as a base station. For example, the terminal device may function as a scheduling entity, which provides a sidelink signal between terminal devices in vehicle to everything (vehicle to everything, V2X), device to device (device to device, D2D), or the like. For example, a cellular phone and a vehicle communicate with each other through a sidelink signal. A cellular phone and a smart home device communicate with each other, without relaying a communication signal through a base station.

The network device in embodiments of this application may be a device configured to communicate with a terminal device. The network device may be, for example, an access network device or a wireless access network device. For example, the network device may be a base station. The base station may broadly cover devices having the following various names, or may be replaced with the devices having the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a home base station, a network controller, an access node, a radio node, an access point (access piont, AP), a transmission node, a transceiver node, a baseband unit (base band unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof.

### Application scenario of a communications system

Currently, main application scenarios of a communications system (such as 5G) may include: enhanced mobile broadband (enhance mobile broadband, eMBB), ultra-reliable and low-latency communications (ultra reliable low latency communication, URLLC), and massive machine type communication (massive machine type communication, mMTC).

The eMBB may be applied to a scenario in which a user obtains multimedia content, a service, data, and the like. The demand for the eMBB is growing rapidly. In addition, since the eMBB may be deployed in different environments, such as indoors, urban areas, and rural areas, capabilities and requirements for the eMBB vary greatly in different environments.

The URLLC may be applied to scenarios such as industrial automation, power automation, remote medical operations (surgery), and traffic safety assurance. Typical features of the mMTC include high connection density, small data volume, delay-insensitive services, low cost and long service life of modules, and the like.

### Radio resource control (radio resource control, RRC) state and mobility management

Currently, the protocol defines three RRC states of a terminal device: an RRC connected (RRC_connected) state, an RRC idle (RRC-idle) state, and an RRC inactive (RRC-inactive) state.

The RRC connected state may be a state of the terminal device presented after a random access procedure is completed but an RRC release is not performed. An RRC connection exists between the terminal device and a network device (for example, an access network device). In the RRC connected state, data transmission, such as downlink data transmission and/or uplink data transmission, may be performed between the terminal device and the network device. Alternatively, transmission of a data channel and/or control channel specific to the terminal device may be performed between the terminal device and the network device, to transmit specific information or unicast information of the terminal device.

In the RRC connected state, the network device may determine cell-specific location information of the terminal device; that is, the network device may determine a cell to which the terminal device belongs. In the RRC connected state, after the terminal device moves, for example, from one cell to another, the network device may control the terminal device to perform cell handover (handover). It may be learned that mobility management of the terminal device in the RRC connected state may include cell handover. In addition, the mobility management of the terminal device in the RRC connected state may be controlled by the network device. Accordingly, the terminal device may be handed over to a designated cell according to an instruction issued by the network device.

The RRC idle state is a state of the terminal device presented when the terminal device camps on a cell but does not perform random access. The terminal device usually enters the RRC idle state after being powered on or after an RRC release. In the RRC idle state, there is no RRC connection between the terminal device and the network device (for example, a network device camped on by the terminal device), a context of the terminal device is not stored in the network device, and no connection is established for the terminal device between the network device and a core network. If the terminal device is required to enter the RRC connected state from the RRC idle state, an RRC connection establishment process is initiated.

In the RRC idle state, the core network (core network, CN) may transmit a paging message to the terminal device; that is, a paging process may be triggered by the CN. Optionally, a paging area may also be configured by the CN. In some cases, for a terminal device in an RRC idle state, after the terminal device moves (for example, from one cell to another), the terminal device may initiate a cell reselection (cell reselection) process. In some other cases, for a terminal device in an RRC idle state, when the terminal device is required to access a cell, the terminal device may initiate a cell selection (cell selection) process. In other words, mobility management of the terminal device in the RRC idle state may include cell reselection and/or cell selection.

The RRC inactive state is a state defined in order to reduce air interface signalling, quickly restore wireless connections, and quickly restore data services. The RRC inactive state is a state between the connected state and the idle state. The terminal device has previously entered the RRC connected state and then released the RRC connection with the network device, but the network device has stored the context of the terminal device. In addition, the connection established for the terminal device between the network device and the core network has not been released. In other words, a user plane bearer and a control plane bearer between the RAN and the CN are still maintained; that is, there is a CN-NR connection.

In the RRC inactive state, the RAN may transmit a paging message to the terminal device; that is, a paging process may be triggered by the RAN. An RAN-based paging area is managed by the RAN, and a location of the terminal device that can be learned by the network device is at the level of the RAN-based paging area.

In some cases, for a terminal device in an RRC inactive state, after the terminal device moves (for example, from one cell to another), the terminal device may initiate a cell reselection procedure. In some other cases, for a terminal device in an RRC inactive state, when the terminal device is required to access a cell, the terminal device may initiate a cell selection procedure. In other words, mobility management of the terminal device in the RRC inactive state may include cell reselection and/or cell selection.

### Release 18 (release 18, R18) network energy saving project

Energy consumption has become an important part of operation costs of an operator. According to the report from the global system for mobile communications association (global system for mobile communications association, GSMA), energy costs of mobile networks account for approximately 23% of total costs of operators. Most of energy consumption comes from radio access networks, in particular, active antenna units (active antenna unit, AAU), while energy consumption of data centers and optical fiber transmission accounts for only a small share.

Energy consumption includes two types:
dynamic part: for example, energy consumption during data transmission/reception; and
static part: for example, energy consumption of an operation of maintaining necessary radio access devices, (even if there is no continuous data transmission or reception at this time).

This project should not only evaluate potential network energy consumption, but also evaluate and balance an impact on network and user performance. For example, this project should not have a particularly large impact on some key performance indicators (key performance indicator, KPIs). The KPIs mentioned herein include spectral efficiency, a capacity, user perceived throughput (user perceived throughput, UPT), a latency, terminal device power consumption, complexity, handover performance, a call drop rate, initial access performance, or the like.

The possible research directions (RP-234065) for the study include an adaptation (adaptation) technology that defines universal signal/channel transmission, for example, adaptation of a physical random access channel (physical random access channel, PRACH) in time domain; for another example, studying adaptation of PRACH in spatial domain; and for another example, adaptation of a paging occasion.

### Spatial domain adaptation

Both a paging resource and a RACH resource have a correspondence with an SSB. In an example of RACH, an SSB direction corresponds to a series of RACH resources. The resources herein may be time-frequency resources or preamble (preamble) resources. FIG. 2 shows a correspondence between an RRB direction and a RACH resource in a related technology. As shown in FIG. 2, quantities of resources corresponding to different SSB directions are the same. In this case, for RACH reception and processing, a network needs to perform same quantity of RACH receptions in each SSB direction, that is, same power needs to be consumed. The spatial adaptation technology is designed to solve the problem, but there is no clear solution to how spatial domain adaptation should be performed.

### Time domain adaptation

In a paging scenario, a paging resource includes paging hyper frames (paging hyper frame, PH), and the PHs are consecutive in time domain, that is, each hyper frame may be a PH. In this way, even if a quantity of terminal devices is relatively small, a network device may need to remain in an active state on all PHs, resulting in large power consumption.

For a paging message transmitted by a core network (core network, CN), a hyper system frame number (hyper system frame number, H-SFN) corresponding to a PH meets the following formula: H-SFN mod TeDRX_CN = (UE_ID_H mod TeDRX_CN), where UE_ID_H represents the highest 13 bits of a hash identifier, and TeDRX_CN is a terminal device-specific extended discontinuous reception (extended discontinuous reception, eDRX) period represented in a unit of hyper frame. The time domain adaptive technology is proposed to avoid a case that a network needs to remain in an active state on all PHs, thereby reducing power consumption. However, currently there is no clear solution to how time domain adaptation should be performed.

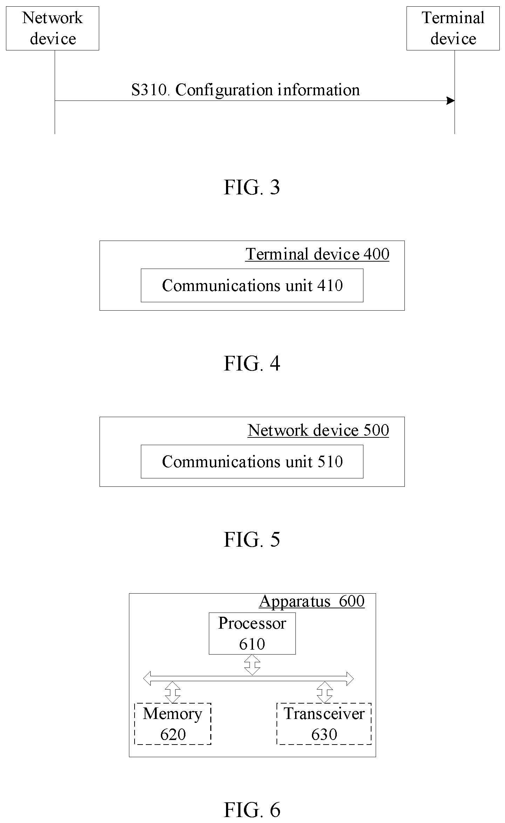

In conclusion, how to design a RACH resource and/or a paging resource to save power on a network is a concern of this application. The following describes embodiments of this application in detail with reference to FIG. 3.

FIG. 3 is a schematic flowchart of a wireless communication method according to an embodiment of this application. Referring to FIG. 3, in step S310, a terminal device receives configuration information of a network device. The configuration information may be configuration information related to a RACH resource and/or a paging resource. For example, the configuration information may include first configuration information and/or second configuration information. The first configuration information is used to configure the RACH resource, and the second configuration information is used to configure the paging resource. If the configuration information includes both the first configuration information and the second configuration information, the first configuration information and the second configuration information may be transmitted simultaneously (that is, configured simultaneously), or may be configured separately (that is, configured separately, for example, carried in different configuration messages). In embodiments of this application, a configuration manner of the RACH resource and/or paging resource may be improved to support adaptive allocation of the RACH resource and/or paging resource in time domain or spatial domain. With reference to different embodiments, the following describes in detail content and/or resource a configuration manner of the first configuration information and the second configuration information.

### Embodiment 1: First configuration information

In some implementations, the first configuration information may be used to independently configure a RACH resource for different SSBs (it should be understood that the RACH resource mentioned in embodiments of this application may refer to a RACH resource, or may refer to a RACH resource set. Therefore, in a case of no conflict, a RACH resource corresponding to an SSB mentioned below may also be understood as or replaced with a RACH resource or a RACH resource set corresponding to an SSB). For example, the first configuration information is used to configure a correspondence between an SSB and a RACH resource, and in the first configuration information, quantities of RACH resources corresponding to different SSBs are not exactly the same. Alternatively, the first configuration information includes a configuration in which "quantities of RACH resources corresponding to different SSBs are not exactly the same". For example, the first configuration information may configure RACH resources corresponding to a first SSB and a second SSB. A quantity of RACH resources corresponding to the first SSB is 20, and a quantity of RACH resources corresponding to the second SSB is 10.

Different SSBs may correspond to different transmission directions. Therefore, an SSB mentioned in embodiments of this application may be replaced with an "SSB direction". A direction of an SSB may be expressed based on an SSB index (index). The SSB index is an identifier used in transmission of an SSB in different directions. Based on the SSB index, it is easy to configure different RACH resources. For example, more RACH resources may be configured for more SSB directions for a terminal device; and less RACH resources may be configured for less SSB directions for the terminal device.

It can be learned from the foregoing content that, in embodiments of this application, RACH resources are properly arranged in spatial domain (in different SSB directions). Therefore, an effect of allowing different quantities of RACH resources in different SSB directions may be achieved according to an actual requirement, thereby facilitating power saving of a network device.

It should be noted that a RACH resource may include two dimensions, that is, a RACH time-frequency resource and a preamble. The RACH time-frequency resource may be understood as a relatively large dimension. Then one RACH time-frequency resource may be further identified by using a preamble. RACH resources on different SSBs may be finely separated by two dimensions. The correspondence between an SSB and a RACH resource may be a correspondence between the SSB and a RACH time-frequency resource and/or a correspondence between the SSB and a preamble. That is to say, RACH resources corresponding to different SSBs may be identified from the dimension of the RACH time-frequency resource, or RACH resources corresponding to different SSBs may be identified from the dimension of the preamble.

For example, the first configuration information is used to configure RACH resources corresponding to the first SSB and the second SSB. The first SSB may correspond to a first RACH time-frequency resource or a time-frequency resource set, the second SSB may correspond to a second RACH time-frequency resource, and the first RACH time-frequency resource and the second RACH time-frequency resource are different time-frequency resources.

For another example, the first configuration information is used to configure RACH resources corresponding to the first SSB and the second SSB. The first SSB may correspond to a first preamble set, and the second SSB may correspond to a second preamble set. A preamble in the first preamble set is different from a preamble in the second preamble set.

In some implementations, the first configuration information is used to configure one or more of the following corresponding to the SSB: a quantity of RACH resources; a start index (or number) of a RACH resource; or an end index (or number) of a RACH resource. For example, the RACH resource may correspond to one preamble in a time-frequency resource. In this case, each RACH resource actually represents a preamble. RACH time-frequency resources and preambles in an entire RACH period may be collectively numbered. Then, the first configuration information may indicate a quantity of preambles corresponding to different SSBs. For example, assuming that a quantity of RACH time-frequency resources is 4, and each RACH time-frequency resource includes 20 preambles, the index (or number) of all resources may be designed as 1, 2, ..., 80. On such a basis, the first configuration information may respectively indicate a quantity of RACHs corresponding to SSBs; and/or the first configuration information may indicate a start index (or number) and an end index (or number) of a preamble corresponding to an SSB. Based on indication of the quantity of RACH resources, the start index, and/or the end index, flexibility of signaling indication may be increased with minimal signaling overheads.

In addition to configuring the correspondence between an SSB and a RACH resource, the first configuration information may further configure a correspondence between a RACH resource and one or more service features. The service features mentioned herein may be associated with one or more of the following: a terminal device of reduced capability (redCap), small data transmission (smallData), network slice access stratum grouping (Network Slice AS Group, NSAG), or message 3 repetition of transmission (msg3-Repetition). For example, a RACH resource used for a service feature may be further divided in different SSB directions, so as to extend embodiments of this application to a scenario in which a RACH is triggered in combination with different service features.

In some implementations, the configuration information mentioned above may further include third configuration information. The third configuration information is used to configure a correspondence between an SSB and a RACH resource, and in the third configuration information, quantities of RACH resources corresponding to different SSBs are the same. A type of the RACH resource configured for the third configuration information is not specifically limited in embodiments of this application. For example, the third configuration information may be used to configure one or more of the following RACH resources: a RACH resource corresponding to four-step random access, a RACH resource corresponding to two-step random access, or a RACH resource used for one or more service features. For a description of a service feature, refer to the foregoing description. Details are not described herein again.

The first configuration information mentioned above may be understood as configuration information provided in embodiments of this application, and the third configuration information may be understood as configuration information provided in a related technology. For ease of understanding, the RACH resource configured by the first configuration information is referred to as a new RACH resource, and the RACH resource configured by the third configuration information is referred to as a legacy RACH resource. A new terminal device may use the new RACH resource, and a legacy terminal device may use the legacy RACH resource. In embodiments of this application, the new and legacy RACH resources may be configured on a same carrier for common use, thereby supporting the new and legacy terminal devices.

In some implementations, the new RACH resource may be distinguished from the legacy RACH resource in time domain. For example, the new RACH resource and the legacy RACH resource may correspond to different random access occasions (RACH occasion, RO). For example, the new RACH resource may be configured on a new RO, and occupies preamble 0-19, and remaining preambles 20-63 may be used for non-contention random access.

In some other implementations, the new RACH resource and the legacy RACH resource may share a time domain resource (such as sharing an RO) and be distinguished from each other at a preamble granularity. For example, the new RACH resource includes a first group of preambles in a first RO, and the legacy RACH includes a second group of preambles in the first RO.

Further, in a solution in which the new RACH resource shares an RO with the legacy RACH resource, the new RACH resource may occupy a preamble originally used in a non-contention random access scenario. For example, the first RO includes a first group of preambles and a second group of preambles, the legacy RACH resource includes the first group of preambles, and the new RACH resource includes the second group of preambles. According to the third configuration information, the second set of preambles is part or all of preambles used for non-contention random access. In other words, the new RACH resource is a random access resource divided from the preambles originally used for non-contention random access.

In a more specific example, based on the third configuration information, four ROs are configured, and each RO occupies 20 preambles. One RO includes 64 preambles, and based on the third configuration information, remaining preambles are used as group-B, which is used as a non-contention preamble (used in a non-contention random access scenario). In this case, the new RACH resource may share an RO with the legacy RACH resource and a resource is divided from the group-B in the RO. For example, for each RO, the legacy RACH resource occupies preambles 0-19, the new RACH resource occupies preambles 20-39, and remaining preambles 40-63 are used as non-contention preambles (used in a non-contention random access scenario). Embodiments of this application facilitate configuration of a new and legacy RACH resources on a same carrier for common use, thereby supporting new and legacy terminal devices.

### Embodiment 2: Second configuration information

The second configuration information may be used to configure a paging resource independently in time domain.

In some implementations, the second configuration information includes a first parameter. The first parameter is used to determine or adjust a density of a paging hyper frame (paging heryer frame, PH) in time domain. For example, the first parameter is used to determine or adjust a quantity of hyper frames in an interval between two consecutive paging start locations. In other words, a quantity of hyper frames in an interval between two consecutive paging start locations is associated with the first parameter. For example, assuming that a number of the first PH is x, and a number of the second PH is y, a value of the first parameter may be y-x+1. A quantity of hyper frames in an interval between the first PH and the second PH may be adjusted by changing the value of the first parameter. It should be understood that the paging start location mentioned in embodiments of this application refers to a paging location corresponding to one or more consecutive PHs. That is to say, a paging start location corresponds to one or more consecutive PHs.

Based on the first parameter, in embodiments of this application, a form of continuous paging in a hyper frame field in a related technology is changed into a form of paging by spacing a specific quantity of hyper frames, thereby helping a network device save energy.

For example, a PH corresponding to a paging start location meets the following formula:
H-SFN mod TeDRX_CN = (TeDRX_CN/X) * (UE_ID_H mod X), where H-SFN represents a frame number of a hyper frame, TeDRX_CN represents a parameter related to time and period (for example, period parameter of eDRX), X represents the first parameter, UE_ID_H represents identity-related information of a terminal device (for example, a hash identity of the terminal device), and mod represents a remainder operation. It should be understood that a name of a variable in the foregoing formula is merely an example, or another variable name may be used instead. According to the foregoing formula, it can be seen that a paging start location appears for each TeDRX_CN/X H-SFN.

Since a network device needs to save energy in a specific time interval, it is better to do more paging for each wake-up, to avoid too high frequency of wake-up from sleep. Therefore, in some implementations, the second parameter may be introduced into the second configuration information, to control a paging quantity required to be performed by the network device at one time. That is to say, the second parameter is used to determine or adjust a quantity of paging resources corresponding to one paging start location (or a quantity of paging resources accommodated at one paging start location). Alternatively, a quantity of paging resources corresponding to one paging start location is associated with the second parameter.

In some implementations, the second parameter is used to determine or adjust a quantity of consecutive PHs corresponding to one paging start location (or the second parameter is used to determine or adjust a quantity of PHs that may be accommodated at one paging start location). By configuring the second parameter, several consecutive PHs appear every several hyper frames. It can be learned that, in embodiments of this application, a requirement of frequent wake-up of the network device is avoided in time domain, a related signal is arranged as long as possible in a continuous and limited period of time, and the network device is allowed to be in a sleep state in another relatively long period of time, to achieve a power saving effect.

For example, consecutive paging hyper frames corresponding to one paging start location and a start location of a paging time window (paging time window, PTW) in the consecutive paging hyper frames meet following formulas: $PH = ieDRX _ CN div 8 ;$ and 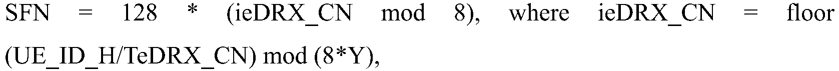 SFN = 128 * (ieDRX_CN mod 8), where ieDRX_CN = floor (UE_ID_H/TeDRX_CN) mod (8*Y),

Herein PH represents an offset relative to one paging start location. For example, if PH = 0, it indicates a paging hyper frame that is the same as the paging start location. If PH = 1, it indicates a hyper frame whose paging start location offset is one hyper frame, SFN represents a start location of a PTW, TeDRX_CN represents a parameter related to time and period (for example, a period parameter of eDRX), UE_ID_H represents identity-related information of a terminal device (for example, a hash identity of the terminal device), mod represents a remainder operation, floor represents a floor operation, div represents a division operation, and Y represents the second parameter.

It can be seen from the foregoing formula that each paging start location corresponds to Y PHs (Y PHs may be accommodated). In the Y PHs, each PTW window is arranged at an interval of 128 frames.

In some implementations, the second parameter is used to determine or adjust a quantity of PTWs corresponding to one paging start location (or the second parameter is used to determine or adjust a quantity of PTWs that may be accommodated at one paging start location). By configuring the second parameter, one paging start location may accommodate a plurality of consecutive PHs. The design of the consecutive PHs may make the network device perform more paging after being woken up, reducing frequency of sleep and waking up.

For example, consecutive paging hyper frames corresponding to one paging start location and a start location of a PTW in the consecutive paging hyper frames meet the following formulas: $PH = ieDRX _ CN div 8 ;$ and 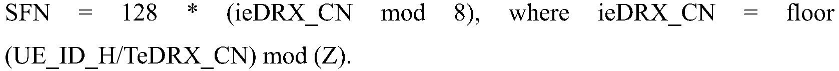 SFN = 128 * (ieDRX_CN mod 8), where ieDRX_CN = floor (UE_ID_H/TeDRX_CN) mod (Z).

Herein PH represents an offset relative to one paging start location. For example, if PH = 0, it indicates a paging hyper frame that is the same as the paging start location. If PH = 1, it indicates a hyper frame whose paging start location offset is one hyper frame, SFN represents a start location of a PTW, TeDRX_CN represents a parameter related to time and period (for example, a period parameter of eDRX), UE_ID_H represents identity-related information of a terminal device (for example, a hash identity of the terminal device), mod represents a remainder operation, floor represents a floor operation, div represents a division operation, and Z represents the second parameter.

In some implementations, the second configuration information further includes a third parameter, and the third parameter is used to determine or adjust an interval between two PTWs. In a related technology, the interval between two PTWs is fixed to 128 frames. In this application, the third parameter is introduced to flexibly adjust a quantity of frames between two PTWs.

For example, consecutive paging hyper frames corresponding to one paging start location and a start location of a PTW in the consecutive paging hyper frames meet the following formulas: $PH = ieDRX _ CN div \left(1024/W\right) ;$ and 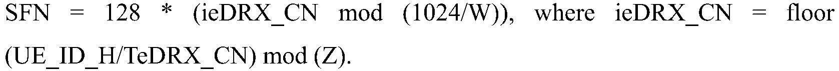 SFN = 128 * (ieDRX_CN mod (1024/W)), where ieDRX_CN = floor (UE_ID_H/TeDRX_CN) mod (Z).

Herein PH represents an offset relative to one paging start location. For example, if PH = 0, it indicates a paging hyper frame that is the same as the paging start location. If PH = 1, it indicates a hyper frame whose paging start location offset is one hyper frame, SFN represents a start location of a PTW, TeDRX_CN represents a parameter related to time and period (for example, a period parameter of eDRX), UE_ID_H represents identity-related information of a terminal device (for example, a hash identity of the terminal device), mod represents a remainder operation, floor represents a floor operation, div represents a division operation, Z is used to determine a quantity of PTWs corresponding to one paging start location, and W represents the third parameter.

For another example, consecutive paging hyper frames corresponding to one paging start location and a start location of a PTW in the consecutive paging hyper frames meet the following formulas: $PH = ieDRX _ CN div \left(1024/W\right) ;$ and 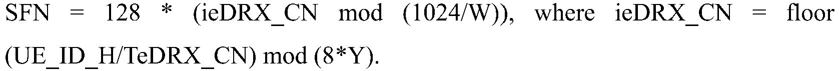 SFN = 128 * (ieDRX_CN mod (1024/W)), where ieDRX_CN = floor (UE_ID_H/TeDRX_CN) mod (8*Y).

Herein PH represents an offset relative to one paging start location. For example, if PH = 0, it indicates a paging hyper frame that is the same as the paging start location. If PH = 1, it indicates a hyper frame whose paging start location offset is one hyper frame, SFN represents a start location of a PTW, TeDRX_CN represents a parameter related to time and period (for example, a period parameter of eDRX), UE_ID_H represents identity-related information of a terminal device (for example, a hash identity of the terminal device), mod represents a remainder operation, floor represents a floor operation, div represents a division operation, Y is used to determine a quantity of consecutive PHs corresponding to one paging start location, and W represents the third parameter.

The adaptive adjustment of paging resources in time domain is described in detail above. The following describes in detail adaptive adjustment of the paging resources in spatial domain.

In some implementations, the second configuration information may independently configure paging resources for different SSBs. For example, the second configuration information is used to configure a correspondence between an SSB and a paging resource, and in the second configuration information, quantities of paging resources corresponding to different SSBs are not exactly the same. Alternatively, the second configuration information includes a configuration in which "quantities of paging resources corresponding to different SSBs are not exactly the same". In embodiments of this application, paging resources are properly arranged in spatial domain, and an effect of allowing different quantities of paging resources in different SSB directions may be achieved according to an actual requirement, thereby facilitating power saving of a network device.

Different SSBs may correspond to different transmission directions. Therefore, an SSB mentioned in embodiments of this application may be replaced with an "SSB direction". The SSB direction may be expressed based on an SSB index (index). Therefore, independently configuring paging resources for different SSBs may also be understood as independently configuring paging resources for different SSB indexes, that is, a plurality of SSB indexes have respective corresponding paging resources. The SSB indexes are identifiers used for transmission of SSBs that are in different directions, facilitating configuration for different paging resources. For example, more paging resources may be configured for more SSB directions for a terminal device; and less paging resources may be configured for less SSB directions for the terminal device.

The paging resource includes a paging monitoring occasion (paging monitoring occasion). In some implementations, paging monitoring occasions corresponding to different SSBs may be independently configured, so that paging resources on different SSBs may be finely separated.

In some implementations, the configuration information mentioned above may further include fourth configuration information. The fourth configuration information is used to configure a correspondence between an SSB and a paging resource, and in the fourth configuration information, quantities of paging resources corresponding to different SSBs are the same. The second configuration information mentioned above may be understood as configuration information provided in embodiments of this application, and the fourth configuration information may be understood as configuration information provided in a related technology. Paging configured by the second configuration information may be used by a new terminal device, and a paging resource configured by the fourth configuration information may be used by a legacy terminal device. The paging resources configured in the two manners may coexist, so that the new and legacy terminal devices may perform paging by using respectively adaptive paging resources.

A time domain location of the paging resource configured by the second configuration information may be different from a time domain location of the paging resource configured by the fourth configuration information. For example, a PO corresponding to the paging resource configured by the second configuration information is located at a time domain location 1, a PO corresponding to the paging resource configured by the fourth configuration information is located at a time domain location 2, and the time domain location 1 and the time domain location 2 are located in different locations in time domain.

In some implementations, a first offset may be introduced into the second configuration information, and a location of the PO corresponding to the paging resource is determined based on the first offset. Based on the first offset, the paging resource configured by the second configuration information and the paging resource configured by the fourth configuration information may correspond to different POs. For example, a PO configured according to a configuration manner provided by a related technology occupies a total of four locations, that is, 0 to 3. Therefore, based on the first offset, the PO configured in embodiments of this application may start from 4. The introduction of the first offset may conveniently separate paging resources of a new user and a legacy user in time domain, thereby ensuring backward compatibility of the solution.

For example, a location of a PO corresponding to the paging resource configured by the second configuration information meets the following formula: $i_s = floor \left(UE_ID/N\right) mod Ns + Offset 1 .$

Herein UE_ID represents identity-related information of the terminal device, N represents a quantity of PFs included in a paging period, Ns represents a quantity of POs in a PF, Offset1 represents the first offset, i_s represents a parameter used to determine a PO, and floor represents a floor operation.

In some implementations, a second offset may be introduced in the second configuration information; or the second configuration information includes a third offset, and based on the third offset, the paging resource configured by the second configuration information and the paging resource configured by the fourth configuration information correspond to different paging monitoring occasions (paging monitoring occasion). The second offset is used to determine a location of a PTW (or SFN) corresponding to the paging resource. Based on the second offset, the paging resource configured by the second configuration information and the paging resource configured by the fourth configuration information may correspond to different PTWs. That is to say, the second offset may distinguish an SFN configured in embodiments of this application from an SFN configured in a related technology. For example, the SFN corresponding to the paging resource configured according to the related technology occupies the N^{th} to (N+9)^{th} SFNs, then the SFN occupied by the paging resource configured in embodiments of this application may start from the (N+10)^{th}.

For example, a location of the SFN or PTW corresponding to the paging resource configured by the second configuration information meets the following formula:
SFN = (128 * ieDRX_CN + Offset2) mod 1024, where SFN represents a start location of the PTW, ieDRX_CN represents a parameter determined based on a period parameter of eDRX, mod represents a remainder operation, and Offset2 represents the second offset. For example, ieDRX_CN = floor (UE_ID_H/TeDRX_CN) mod (8), where UE_ID_H represents an identity-related information of the terminal device (such as a hash identity of the terminal device), and TeDRX_CN represents a parameter related to time and period (such as a period parameter of eDRX).

For another example, a location of the SFN or PTW corresponding to the paging resource configured by the second configuration information meets the following formula:
SFN = (128 * (ieDRX_CN mod 8) + Offset2) mod 1024, where SFN represents a start location of the PTW, ieDRX_CN represents a parameter determined based on a period parameter of eDRX, mod represents a remainder operation, and Offset2 represents the second offset. For example, ieDRX_CN = floor(UE_ID_H/TeDRX_CN) mod (8), where UE_ID_H represents an identity-related information of the terminal device (such as a hash identity of the terminal device), and TeDRX_CN represents a parameter related to time and period (such as a period parameter of eDRX).

For another example, a location of the SFN or PTW corresponding to the paging resource configured by the second configuration information meets the following formula:
SFN = (W * (ieDRX_CN mod (1024/W)) + Offset2) mod 1024, where SFN represents a start location of the PTW, ieDRX_CN represents a parameter determined based on a period parameter of eDRX, mod represents a remainder operation, Offset2 represents the second offset, and W is used to determine an interval between two PTWs. For example, ieDRX_CN = floor (UE_ID_H/TeDRX_CN) mod (8), where UE_ID_H represents an identity-related information of the terminal device (such as a hash identity of the terminal device), and TeDRX_CN represents a parameter related to time and period (such as a period parameter of eDRX).

The method embodiments of this application are described above in detail with reference to FIG. 1 to FIG. 3. Apparatus embodiments of this application are described below in detail with reference to FIG. 4 to FIG. 6. It should be understood that the descriptions of the method embodiments correspond to descriptions of the apparatus embodiments, and therefore, for parts that are not described in detail, reference may be made to the foregoing method embodiments.

FIG. 4 is a schematic structural diagram of a terminal device according to an embodiment of this application. A terminal device 400 shown in FIG. 4 includes a communications unit 410. The communications unit 410 is configured to receive configuration information of a network device. The configuration information includes one or more of the following: first configuration information, where the first configuration information is used to configure a correspondence between an SSB and a RACH resource, and in the first configuration information, quantities of RACH resources corresponding to different SSBs are not exactly the same; and second configuration information, used to configure a paging resource.

In some implementations, the RACH resource includes one or more of the following:
a RACH time-frequency resource; or
a preamble.

In some implementations, the first configuration information is used to configure one or more of the following corresponding to the SSB:
a quantity of RACH resources;
a start index of a RACH resource; or
an end index of a RACH resource.

In some implementations, the RACH resource corresponds to one preamble in a time-frequency resource.

In some implementations, the first configuration information is further used to configure a correspondence between the RACH resource and one or more service features.

In some implementations, the one or more service features are associated with one or more of the following:
a terminal device of reduced capability;
small data transmission;
network slice access stratum grouping; or
message3 repetition of transmission.

In some implementations, the configuration information further includes:
third configuration information, used to configure a correspondence between an SSB and a RACH resource, where in the third configuration information, quantities of RACH resources corresponding to different SSBs are the same.

In some implementations, a RACH resource configured for the first configuration information is a first RACH resource, a RACH resource configured for the third configuration information is a second RACH resource, and the first RACH resource and the second RACH resource correspond to different ROs.

In some implementations, a RACH resource configured for the first configuration information is a first RACH resource, a RACH resource configured for the third configuration information is a second RACH resource, the first RACH resource includes a first group of preambles in a first RO, and the second RACH includes a second group of preambles in the first RO.

In some implementations, the first RO includes a third group of preambles, based on the third configuration information, the third group of preambles is used for non-contention random access, and the second group of preambles includes part or all of preambles in the third group of preambles.

In some implementations, the third configuration information is used to configure one or more of the following RACH resources:
a RACH resource corresponding to four-step random access;
a RACH resource corresponding to two-step random access; or
a RACH resource for one or more service features.

In some implementations, the second configuration information includes a first and the first parameter is used to determine a density of a paging hyper frame in time domain.

In some implementations, the first parameter is used to determine a quantity of hyper frames in an interval between two consecutive paging start locations.

In some implementations, a paging hyper frame corresponding to one paging start location meets the following formula:
H-SFN mod TeDRX_CN = (TeDRX_CN/X) * (UE_ID_H mod X), where H-SFN represents a frame number of a hyper frame, TeDRX_CN represents a period parameter of an extended discontinuous reception eDRX, X represents the first parameter, UE_ID_H represents identity-related information of the terminal device, and mod represents a remainder operation.

In some implementations, the second configuration information further includes a second and the second parameter is used to determine a quantity of paging resources corresponding to one paging start location.

In some implementations, the second parameter is used to determine a quantity of consecutive paging hyper frames corresponding to one paging start location.

In some implementations, consecutive paging hyper frames corresponding to one paging start location and a start location of a paging time window PTW in the consecutive paging hyper frames meet the following formulas: $PH = ieDRX _ CN div 8 ;$ and 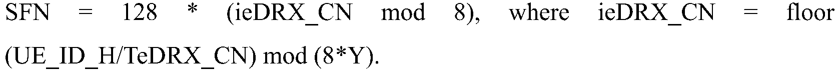 SFN = 128 * (ieDRX_CN mod 8), where ieDRX_CN = floor (UE_ID_H/TeDRX_CN) mod (8*Y).

Herein PH represents an offset relative to one paging start location. For example, if PH = 0, it indicates a paging hyper frame that is the same as the paging start location. If PH = 1, it indicates a hyper frame whose paging start location offset is one hyper frame, SFN represents a start location of a PTW, TeDRX_CN represents a period parameter of eDRX, UE_ID_H represents identity-related information of the terminal device, mod represents a remainder operation, floor represents a floor operation, div represents a division operation, and Y represents the second parameter.

In some implementations, the second parameter is used to determine a quantity of PTWs corresponding to one paging start location.

In some implementations, consecutive paging hyper frames corresponding to one paging start location and a start location of a PTW in the consecutive paging hyper frames meet the following formulas: $PH = ieDRX _ CN div 8 ;$ and 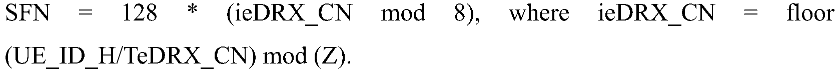 SFN = 128 * (ieDRX_CN mod 8), where ieDRX_CN = floor (UE_ID_H/TeDRX_CN) mod (Z).

Herein PH represents an offset relative to one paging start location. For example, if PH = 0, it indicates a paging hyper frame that is the same as the paging start location. If PH = 1, it indicates a hyper frame whose paging start location offset is one hyper frame, SFN represents a start location of a PTW, TeDRX_CN represents a period parameter of eDRX, UE_ID_H represents identity-related information of the terminal device, mod represents a remainder operation, floor represents a floor operation, div represents a division operation, and Z represents the second parameter.

In some implementations, the second configuration information further includes a third parameter, and the third parameter is used to determine an interval between two PTWs.

In some implementations, consecutive paging hyper frames corresponding to one paging start location and a start location of a PTW in the consecutive paging hyper frames meet the following formulas: $PH = ieDRX _ CN div \left(1024/W\right) ;$ and 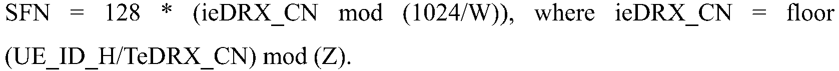 SFN = 128 * (ieDRX_CN mod (1024/W)), where ieDRX_CN = floor (UE_ID_H/TeDRX_CN) mod (Z).

Herein PH represents an offset relative to one paging start location. For example, if PH = 0, it indicates a paging hyper frame that is the same as the paging start location. If PH = 1, it indicates a hyper frame whose paging start location offset is one hyper frame, SFN represents a start location of a PTW, TeDRX_CN represents a period parameter of eDRX, UE_ID_H represents identity-related information of the terminal device, mod represents a remainder operation, floor represents a floor operation, div represents a division operation, Z is used to determine a quantity of PTWs corresponding to one paging start location, and W represents the third parameter.

In some implementations, the second configuration information is used to configure a correspondence between an SSB and a paging resource, and in the second configuration information, quantities of paging resources corresponding to different SSBs are not exactly the same.

In some implementations, the configuration information further includes:
fourth configuration information, used to configure a correspondence between an SSB and a paging resource, and in the fourth configuration information, quantities of paging resources corresponding to different SSBs are the same.

In some implementations, the second configuration information includes a first offset, and based on the first offset, paging resources configured by the second configuration information and the fourth configuration information correspond to different paging occasions POs.

In some implementations, a location of a PO corresponding to the paging resource configured by the second configuration information meets the following formula: $i_s = floor \left(UE_ID/N\right) mod Ns + Offset 1 .$

Herein UE_ID represents identity-related information of the terminal device, N represents a quantity of paging frames PFs included in a paging period, Ns represents a quantity of POs in a PF, Offset1 represents the first offset, i_s represents a parameter used to determine a PO, and floor represents a floor operation.

In some implementations, the second configuration information includes a second offset, and based on the second offset, paging resources configured by the second configuration information and the fourth configuration information correspond to different PTWs.

In some implementations, a location of a PTW corresponding to the paging resource meets the following formula: $SFN = \left(128*ieDRX_CN+Offset2\right) mod 1024 ;$ or $SFN = \left(128*\left(ieDRX_CN mod 8\right)+Offset2\right) mod 1024 ;$ or $SFN = \left(W*\left(ieDRX_CN mod\left(1024/W\right)\right)+Offset2\right) mod 1024 ,$

Herein SFN represents a start location of the PTW, ieDRX_CN represents a parameter determined based on a period parameter of eDRX, mod represents a remainder operation, Offset2 represents the second offset, and W is used to determine an interval between two PTWs.

In some implementations, the paging resource includes a paging monitoring occasion.

In some implementations, the plurality of SSBs correspond to different transmission directions.

FIG. 5 is a schematic structural diagram of a network device according to an embodiment of this application. The network device shown in FIG. 5 includes a communications unit 510. The communications unit 510 is configured to transmit configuration information to a terminal device, where the configuration information includes one or more of the following: first configuration information, where the first configuration information is used to configure a correspondence between an SSB and a RACH resource, and in the first configuration information, quantities of RACH resources corresponding to different SSBs are not exactly the same; and second configuration information, used to configure a paging resource.

In some implementations, the RACH resource includes one or more of the following:
RACH time-frequency resource; or
a preamble.

In some implementations, the first configuration information is used to configure one or more of the following corresponding to the SSB:
a quantity of RACH resources;
a start index of a RACH resource; or
an end index of a RACH resource.

In some implementations, the RACH resource corresponds to one preamble in a time-frequency resource.

In some implementations, the first configuration information is further used to configure a correspondence between the RACH resource and one or more service features.

In some implementations, the one or more service features are associated with one or more of the following:
a terminal device of reduced capability;
small data transmission;
network slice access stratum grouping; or
message3 repetition of transmission.

In some implementations, the configuration information further includes:
third configuration information, used to configure a correspondence between an SSB and a RACH resource, where in the third configuration information, quantities of RACH resources corresponding to different SSBs are the same.

In some implementations, a RACH resource configured for the first configuration information is a first RACH resource, a RACH resource configured for the third configuration information is a second RACH resource, and the first RACH resource and the second RACH resource correspond to different ROs.

In some implementations, a RACH resource configured for the first configuration information is a first RACH resource, a RACH resource configured for the third configuration information is a second RACH resource, the first RACH resource includes a first group of preambles in a first RO, and the second RACH includes a second group of preambles in the first RO.

In some implementations, the first RO includes a third group of preambles, based on the third configuration information, the third group of preambles is used for non-contention random access, and the second group of preambles includes part or all of preambles in the third group of preambles.

In some implementations, the third configuration information is used to configure one or more of the following RACH resources:
a RACH resource corresponding to four-step random access;
a RACH resource corresponding to two-step random access; or
a RACH resource for one or more service features.

In some implementations, the second configuration information includes a first and the first parameter is used to determine a density of a paging hyper frame in time domain.

In some implementations, the first parameter is used to determine a quantity of hyper frames in an interval between two consecutive paging start locations.

In some implementations, a paging hyper frame corresponding to one paging start location meets the following formula:
H-SFN mod TeDRX_CN = (TeDRX_CN/X) * (UE_ID_H mod X), where H-SFN represents a frame number of a hyper frame, TeDRX_CN represents a period parameter of an extended discontinuous reception eDRX, X represents the first parameter, UE_ID_H represents identity-related information of the terminal device, and mod represents a remainder operation.

In some implementations, the second configuration information further includes a second parameter and the second parameter is used to determine a quantity of paging resources corresponding to one paging start location.

In some implementations, the second parameter is used to determine a quantity of consecutive paging hyper frames corresponding to one paging start location.

In some implementations, consecutive paging hyper frames corresponding to one paging start location and a start location of a paging time window PTW in the consecutive paging hyper frames meet the following formulas: $PH = ieDRX _ CN div 8 ;$ and 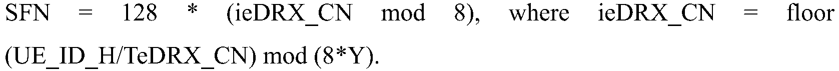 SFN = 128 * (ieDRX_CN mod 8), where ieDRX_CN = floor (UE_ID_H/TeDRX_CN) mod (8*Y).

Herein PH represents an offset relative to one paging start location. For example, if PH = 0, it indicates a paging hyper frame that is the same as the paging start location. If PH = 1, it indicates a hyper frame whose paging start location offset is one hyper frame, SFN represents a start location of a PTW, TeDRX_CN represents a period parameter of eDRX, UE_ID_H represents identity-related information of the terminal device, mod represents a remainder operation, floor represents a floor operation, div represents a division operation, and Y represents the second parameter.

In some implementations, the second parameter is used to determine a quantity of PTWs corresponding to one paging start location.

In some implementations, consecutive paging hyper frames corresponding to one paging start location and a start location of a PTW in the consecutive paging hyper frames meet the following formulas: $PH = ieDRX _ CN div 8 ;$ and 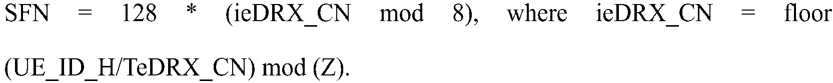 SFN = 128 * (ieDRX_CN mod 8), where ieDRX_CN = floor (UE_ID_H/TeDRX_CN) mod (Z).

Herein PH represents an offset relative to one paging start location. For example, if PH = 0, it indicates a paging hyper frame that is the same as the paging start location. If PH = 1, it indicates a hyper frame whose paging start location offset is one hyper frame, SFN represents a start location of a PTW, TeDRX_CN represents a period parameter of eDRX, UE_ID_H represents identity-related information of the terminal device, mod represents a remainder operation, floor represents a floor operation, div represents a division operation, and Z represents the second parameter.

In some implementations, the second configuration information further includes a third parameter, and the third parameter is used to determine an interval between two PTWs.

In some implementations, consecutive paging hyper frames corresponding to one paging start location and a start location of a PTW in the consecutive paging hyper frames meet the following formulas: $PH = ieDRX _ CN div \left(1024/W\right) ;$ and 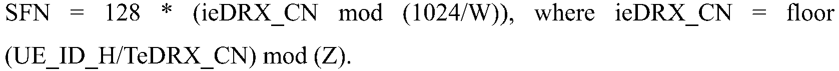 SFN = 128 * (ieDRX_CN mod (1024/W)), where ieDRX_CN = floor (UE_ID_H/TeDRX_CN) mod (Z).

Herein PH represents an offset relative to one paging start location. For example, if PH = 0, it indicates a paging hyper frame that is the same as the paging start location. If PH = 1, it indicates a hyper frame whose paging start location offset is one hyper frame, SFN represents a start location of a PTW, TeDRX_CN represents a period parameter of eDRX, UE_ID_H represents identity-related information of the terminal device, mod represents a remainder operation, floor represents a floor operation, div represents a division operation, Z is used to determine a quantity of PTWs corresponding to one paging start location, and W represents the third parameter.

In some implementations, the second configuration information is used to configure a correspondence between an SSB and a paging resource, and in the second configuration information, quantities of paging resources corresponding to different SSBs are not exactly the same.

In some implementations, the configuration information further includes:
fourth configuration information, used to configure a correspondence between an SSB and a paging resource, and in the fourth configuration information, quantities of paging resources corresponding to different SSBs are the same.

In some implementations, the second configuration information includes a first offset, and based on the first offset, paging resources configured by the second configuration information and the fourth configuration information correspond to different POs.

In some implementations, a location of a PO corresponding to the paging resource configured by the second configuration information meets the following formula: $i_s = floor \left(UE_ID/N\right) mod Ns + Offset 1 .$

Herein UE_ID represents identity-related information of the terminal device, N represents a quantity of paging frames PFs included in a paging period, Ns represents a quantity of POs in a PF, Offset1 represents the first offset, i_s represents a parameter used to determine a PO, and floor represents a floor operation.

In some implementations, the second configuration information includes a second offset, and based on the second offset, paging resources configured by the second configuration information and the fourth configuration information correspond to different PTWs.

In some implementations, a location of a PTW corresponding to the paging resource meets the following formula: $SFN = \left(128*ieDRX_CN+Offset2\right) mod 1024 ;$ or $SFN = \left(128*\left(ieDRX_CN mod 8\right)+Offset2\right) mod 1024 ;$ or $SFN = \left(W*\left(ieDRX_CN mod\left(1024/W\right)\right)+Offset2\right) mod 1024 ,$

Herein SFN represents a start location of the PTW, ieDRX_CN represents a parameter determined based on a period parameter of eDRX, mod represents a remainder operation, Offset2 represents the second offset, and W is used to determine an interval between two PTWs.

In some implementations, the paging resource includes a paging monitoring occasion.

FIG. 6 is a schematic diagram of a structure of a communications apparatus to which an embodiment of this application is applicable. Dashed lines in FIG. 6 indicate that a unit or module is optional. The apparatus 600 may be configured to implement the methods described in the foregoing method embodiments. The apparatus 600 may be a chip, a terminal device, or a network device.

The apparatus 600 may include one or more processors 610. The processor 610 may support the apparatus 600 in implementing the methods described in the foregoing method embodiments. The processor 610 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 600 may further include one or more memories 620. The memory 620 stores a program, where the program may be executed by the processor 610, to cause the processor 610 to execute the methods described in the method embodiments. The memory 620 may be separated from or integrated into the processor 610.

The apparatus 600 may further include a transceiver 630. The processor 610 may communicate with another device or chip by using the transceiver 630. For example, the processor 610 may transmit data to and receive data from another device or chip through the transceiver 630.

An embodiment of this application further provides a computer-readable storage medium for storing a program. The computer-readable storage medium may be applied to the terminal device or the network device provided in embodiments of this application, and the program causes a computer to execute a method executed by the terminal device or the network device in embodiments of this application.

An embodiment of this application further provides a computer program product. The computer program product includes a program. The computer program product may be applied to the terminal device or the network device provided in the embodiments of this application, and the program causes a computer to execute the method performed by the terminal device or the network device in various embodiments of this application.

An embodiment of this application further provides a computer program. The computer program may be applied to the terminal device or the network device provided in the embodiments of this application, and the computer program causes a computer to execute the methods performed by the terminal device or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In embodiments of this application, the term "correspond" may mean that there is a direct or indirect correspondence between the two, or may mean that there is an association relationship between the two, or may mean that there is a relationship such as indicating and being indicated, or configuring and being configured.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being predefined may refer to being defined in a protocol.

In embodiments of this application, the "protocol" may indicate a standard protocol in the communications field, which may include, for example, an LTE protocol, an NR protocol, and a related protocol applied to a future communications system. This is not limited in this application.

In embodiments of this application, the term "and/or" describes merely an association relationship between associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution orders. The execution orders of the processes should be determined based on functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, wireless, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device, configuration information of a network device, wherein the configuration information comprises one or more of following:
first configuration information, used to configure a correspondence between a synchronization signal block SSB and a random access channel RACH resource, wherein in the first configuration information, quantities of RACH resources corresponding to different SSBs are not exactly the same; or
second configuration information, used to configure a paging resource.

2. The method according to claim 1, wherein the RACH resource comprises one or more of following:
a RACH resource;
a RACH resource set;
a RACH time-frequency resource;
a RACH time-frequency resource set; or
a preamble.

3. The method according to claim 2, wherein the first configuration information is used to configure one or more of following corresponding to the SSB:
a quantity of RACH resources;
a start index of a RACH resource; or
an end index of a RACH resource.

4. The method according to claim 2 or 3, wherein the RACH resource corresponds to one preamble in a time-frequency resource.

5. The method according to any one of claims 1 to 4, wherein the first configuration information is further used to configure a correspondence between the RACH resource and one or more service features.

6. The method according to claim 5, wherein the one or more service features are associated with one or more of following:
a terminal device of reduced capability;
small data transmission;
network slice access stratum grouping; or
message3 repetition of transmission.

7. The method according to any one of claims 1 to 6, wherein the configuration information further comprises:
third configuration information, used to configure a correspondence between an SSB and a RACH resource, wherein in the third configuration information, quantities of RACH resources corresponding to different SSBs are the same.

8. The method according to claim 7, wherein a RACH resource configured for the first configuration information is a first RACH resource, a RACH resource configured for the third configuration information is a second RACH resource, and the first RACH resource and the second RACH resource correspond to different random access channel occasions ROs.

9. The method according to claim 7, wherein a RACH resource configured for the first configuration information is a first RACH resource, a RACH resource configured for the third configuration information is a second RACH resource, the first RACH resource comprises a first group of preambles in a first RO, and the second RACH comprises a second group of preambles in the first RO.

10. The method according to claim 9, wherein the first RO comprises a third group of preambles, based on the third configuration information, the third group of preambles is used for non-contention random access, and the second group of preambles comprises part or all of preambles in the third group of preambles.

11. The method according to any one of claims 7 to 10, wherein the third configuration information is used to configure one or more of following RACH resources:
a RACH resource corresponding to four-step random access;
a RACH resource corresponding to two-step random access; or
a RACH resource for one or more service features.

12. The method according to any one of claims 1 to 11, wherein the second configuration information comprises a first parameter, and the first parameter is used to determine a density of a paging hyper frame in time domain.

13. The method according to claim 12, wherein the first parameter is used to determine a quantity of hyper frames in an interval between two consecutive paging start locations.

14. The method according to claim 13, wherein a paging hyper frame corresponding to one paging start location meets following formula:
H-SFN mod TeDRX_CN = (TeDRX_CN/X) * (UE_ID_H mod X), wherein H-SFN represents a frame number of a hyper frame, TeDRX_CN represents a period parameter of an extended discontinuous reception eDRX, X represents the first parameter, UE_ID_H represents identity-related information of the terminal device, and mod represents a remainder operation.

15. The method according to any one of claims 12 to 14, wherein the second configuration information further comprises a second parameter, and the second parameter is used to determine a quantity of paging resources corresponding to one paging start location.

16. The method according to claim 15, wherein the second parameter is used to determine a quantity of consecutive paging hyper frames corresponding to one paging start location.

17. The method according to claim 16, wherein the consecutive paging hyper frames corresponding to one paging start location and a start location of a paging time window PTW in the consecutive paging hyper frames meet following formulas: $PH = ieDRX _ CN div 8 ;$ and 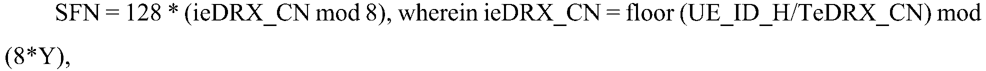 SFN = 128 * (ieDRX_CN mod 8), wherein ieDRX_CN = floor (UE_ID_H/TeDRX_CN) mod (8*Y), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, and Y represents the second parameter.

18. The method according to claim 15, wherein the second parameter is used to determine a quantity of PTWs corresponding to one paging start location.

19. The method according to claim 18, wherein consecutive paging hyper frames corresponding to one paging start location and a start location of a PTW in the consecutive paging hyper frames meet following formulas: $PH = ieDRX _ CN div 8 ;$ and 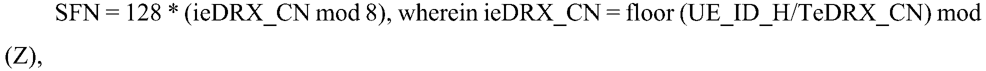 SFN = 128 * (ieDRX_CN mod 8), wherein ieDRX_CN = floor (UE_ID_H/TeDRX_CN) mod (Z), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, and Z represents the second parameter.

20. The method according to any one of claims 12 to 19, wherein the second configuration information further comprises a third parameter, and the third parameter is used to determine an interval between two PTWs.

21. The method according to claim 20, wherein consecutive paging hyper frames corresponding to one paging start location and a start location of a PTW in the consecutive paging hyper frames meet following formulas: $PH = ieDRX _ CN div \left(1024/W\right) ;$ and 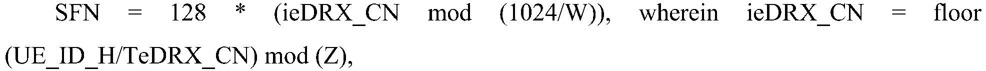 SFN = 128 * (ieDRX_CN mod (1024/W)), wherein ieDRX_CN = floor (UE_ID_H/TeDRX_CN) mod (Z), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, Z is used to determine a quantity of PTWs corresponding to one paging start location, and W represents the third parameter.

22. The method according to any one of claims 1 to 21, wherein the second configuration information is used to configure a correspondence between an SSB and a paging resource, and in the second configuration information, quantities of paging resources corresponding to different SSBs are not exactly the same.

23. The method according to claim 22, wherein the configuration information further comprises:
fourth configuration information, used to configure a correspondence between an SSB and a paging resource, and in the fourth configuration information, quantities of paging resources corresponding to different SSBs are the same.

24. The method according to claim 23, wherein the second configuration information comprises a first offset, and based on the first offset, paging resources configured by the second configuration information and the fourth configuration information correspond to different paging occasions POs.

25. The method according to claim 24, wherein a location of a PO corresponding to the paging resource configured by the second configuration information meets following formula: $i_s = floor \left(UE_ID/N\right) mod Ns + Offset 1 ,$ wherein UE_ID represents identity-related information of the terminal device, N represents a quantity of paging frames PFs comprised in a paging period, Ns represents a quantity of POs in a PF, Offset1 represents the first offset, i_s represents a parameter used to determine a PO, and floor represents a floor operation.

26. The method according to any one of claims 23 to 25, wherein the second configuration information comprises a second offset, and based on the second offset, paging resources configured by the second configuration information and the fourth configuration information correspond to different PTWs; or
the second configuration information comprises a third offset, and based on the third offset, paging resources configured by the second configuration information and the fourth configuration information correspond to different paging monitoring occasions.

27. The method according to claim 26, wherein a location of a PTW corresponding to the paging resource meets following formula: $SFN = \left(128*ieDRX_CN+Offset2\right) mod 1024 ;$ or $SFN = \left(128*\left(ieDRX_CN mod 8\right)+Offset2\right) mod 1024 ;$ or $SFN = \left(W*\left(ieDRX_CN mod\left(1024/W\right)\right)+Offset2\right) mod 1024 ,$ wherein SFN represents a start location of the PTW, ieDRX_CN represents a parameter determined based on a period parameter of eDRX, mod represents a remainder operation, Offset2 represents the second offset, and W is used to determine an interval between two PTWs.

28. The method according to any one of claims 1 to 27, wherein the paging resource comprises a paging monitoring occasion.

29. The method according to any one of claims 1 to 28, wherein the SSBs correspond to different transmission directions.

30. A wireless communication method, comprising:
transmitting, by a network device, configuration information to a terminal device, wherein the configuration information comprises one or more of following:
first configuration information, used to configure a correspondence between a synchronization signal block SSB and a random access channel RACH resource, wherein in the first configuration information, quantities of RACH resources corresponding to different SSBs are not exactly the same; or
second configuration information, used to configure a paging resource.

31. The method according to claim 30, wherein the RACH resource comprises one or more of following:
a RACH resource;
a RACH resource set;
a RACH time-frequency resource;
a RACH time-frequency resource set; or
a preamble.

32. The method according to claim 31, wherein the first configuration information is used to configure one or more of following corresponding to the SSB:
a quantity of RACH resources;
a start index of a RACH resource; or
an end index of a RACH resource.

33. The method according to claim 31 or 32, wherein the RACH resource corresponds to one preamble in a time-frequency resource.

34. The method according to any one of claims 30 to 33, wherein the first configuration information is further used to configure a correspondence between the RACH resource and one or more service features.

35. The method according to claim 34, wherein the one or more service features are associated with one or more of following:
a terminal device of reduced capability;
small data transmission;
network slice access stratum grouping; or
message3 repetition of transmission.

36. The method according to any one of claims 30 to 35, wherein the configuration information further comprises:
third configuration information, used to configure a correspondence between an SSB and a RACH resource, wherein in the third configuration information, quantities of RACH resources corresponding to different SSBs are the same.

37. The method according to claim 36, wherein a RACH resource configured for the first configuration information is a first RACH resource, a RACH resource configured for the third configuration information is a second RACH resource, and the first RACH resource and the second RACH resource correspond to different random access channel occasions ROs.

38. The method according to claim 36, wherein a RACH resource configured for the first configuration information is a first RACH resource, a RACH resource configured for the third configuration information is a second RACH resource, the first RACH resource comprises a first group of preambles in a first RO, and the second RACH comprises a second group of preambles in the first RO.

39. The method according to claim 38, wherein the first RO comprises a third group of preambles, based on the third configuration information, the third group of preambles is used for non-contention random access, and the second group of preambles comprises part or all of preambles in the third group of preambles.

40. The method according to any one of claims 36 to 39, wherein the third configuration information is used to configure one or more of following RACH resources:
a RACH resource corresponding to four-step random access;
a RACH resource corresponding to two-step random access; or
a RACH resource for one or more service features.

41. The method according to any one of claims 30 to 40, wherein the second configuration information comprises a first parameter, and the first parameter is used to determine a density of a paging hyper frame in time domain.

42. The method according to claim 41, wherein the first parameter is used to determine a quantity of hyper frames in an interval between two consecutive paging start locations.

43. The method according to claim 42, wherein a paging hyper frame corresponding to one paging start location meets following formula:
H-SFN mod TeDRX_CN = (TeDRX_CN/X) * (UE_ID_H mod X), wherein H-SFN represents a frame number of a hyper frame, TeDRX_CN represents a period parameter of an extended discontinuous reception eDRX, X represents the first parameter, UE_ID_H represents identity-related information of the terminal device, and mod represents a remainder operation.

44. The method according to any one of claims 41 to 43, wherein the second configuration information further comprises a second parameter, and the second parameter is used to determine a quantity of paging resources corresponding to one paging start location.

45. The method according to claim 44, wherein the second parameter is used to determine a quantity of consecutive paging hyper frames corresponding to one paging start location.

46. The method according to claim 45, wherein the consecutive paging hyper frames corresponding to one paging start location and a start location of a paging time window PTW in the consecutive paging hyper frames meet following formulas: $PH = ieDRX _ CN div 8 ;$ and 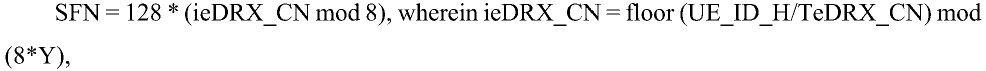 SFN = 128 * (ieDRX_CN mod 8), wherein ieDRX_CN = floor (UE_ID_H/TeDRX_CN) mod (8*Y), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, and Y represents the second parameter.

47. The method according to claim 44, wherein the second parameter is used to determine a quantity of PTWs corresponding to one paging start location.

48. The method according to claim 47, wherein consecutive paging hyper frames corresponding to one paging start location and a start location of a PTW in the consecutive paging hyper frames meet following formulas: $PH = ieDRX _ CN div 8 ;$ and 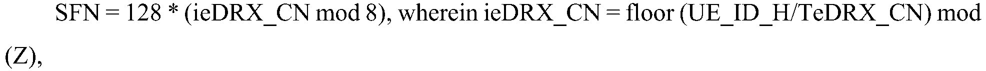 SFN = 128 * (ieDRX_CN mod 8), wherein ieDRX_CN = floor (UE_ID_H/TeDRX_CN) mod (Z), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, and Z represents the second parameter.

49. The method according to any one of claims 41 to 48, wherein the second configuration information further comprises a third parameter, and the third parameter is used to determine an interval between two PTWs.

50. The method according to claim 49, wherein consecutive paging hyper frames corresponding to one paging start location and a start location of a PTW in the consecutive paging hyper frames meet following formulas: $PH = ieDRX _ CN div \left(1024/W\right) ;$ and 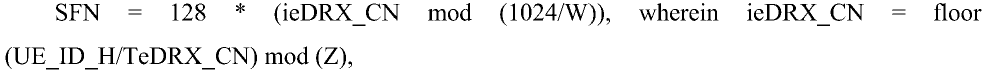 SFN = 128 * (ieDRX_CN mod (1024/W)), wherein ieDRX_CN = floor (UE_ID_H/TeDRX_CN) mod (Z), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, Z is used to determine a quantity of PTWs corresponding to one paging start location, and W represents the third parameter.

51. The method according to any one of claims 30 to 50, wherein the second configuration information is used to configure a correspondence between an SSB and a paging resource, and in the second configuration information, quantities of paging resources corresponding to different SSBs are not exactly the same.

52. The method according to claim 51, wherein the configuration information further comprises:
fourth configuration information, used to configure a correspondence between an SSB and a paging resource, and in the fourth configuration information, quantities of paging resources corresponding to different SSBs are the same.

53. The method according to claim 52, wherein the second configuration information comprises a first offset, and based on the first offset, paging resources configured by the second configuration information and the fourth configuration information correspond to different paging occasions POs.

54. The method according to claim 53, wherein a location of a PO corresponding to the paging resource configured by the second configuration information meets following formula: $i_s = floor \left(UE_ID/N\right) mod Ns + Offset 1 ,$ wherein UE_ID represents identity-related information of the terminal device, N represents a quantity of paging frames PFs comprised in a paging period, Ns represents a quantity of POs in a PF, Offset1 represents the first offset, i_s represents a parameter used to determine a PO, and floor represents a floor operation.

55. The method according to any one of claims 52 to 54, wherein the second configuration information comprises a second offset, and based on the second offset, paging resources configured by the second configuration information and the fourth configuration information correspond to different PTWs; or
the second configuration information comprises a third offset, and based on the third offset, paging resources configured by the second configuration information and the fourth configuration information correspond to different paging monitoring occasions.

56. The method according to claim 55, wherein a location of a PTW corresponding to the paging resource meets following formula: $SFN = \left(128*ieDRX_CN+Offset2\right) mod 1024 ;$ or $SFN = \left(128*\left(ieDRX_CN mod 8\right)+Offset2\right) mod 1024 ;$ or $SFN = \left(W*\left(ieDRX_CN mod\left(1024/W\right)\right)+Offset2\right) mod 1024 ,$ wherein SFN represents a start location of the PTW, ieDRX_CN represents a parameter determined based on a period parameter of eDRX, mod represents a remainder operation, Offset2 represents the second offset, and W is used to determine an interval between two PTWs.

57. The method according to any one of claims 30 to 56, wherein the paging resource comprises a paging monitoring occasion.

58. The method according to any one of claims 30 to 57, wherein the SSBs correspond to different transmission directions.

59. A terminal device, comprising:
a communications unit, configured to receive configuration information of a network device, wherein the configuration information comprises one or more of following:
first configuration information, used to configure a correspondence between a synchronization signal block SSB and a random access channel RACH resource, wherein in the first configuration information, quantities of RACH resources corresponding to different SSBs are not exactly the same; or
second configuration information, used to configure a paging resource.

60. The terminal device according to claim 59, wherein the RACH resource comprises one or more of following parameters:
a RACH resource;
a RACH resource set;
a RACH time-frequency resource;
a RACH time-frequency resource set; or
a preamble.

61. The terminal device according to claim 60, wherein the first configuration information is used to configure one or more of following corresponding to the SSB:
a quantity of RACH resources;
a start index of a RACH resource; or
an end index of a RACH resource.

62. The terminal device according to claim 60 or 61, wherein the RACH resource corresponds to one preamble in a time-frequency resource.

63. The terminal device according to any one of claims 59 to 62, wherein the first configuration information is further used to configure a correspondence between the RACH resource and one or more service features.

64. The terminal device according to claim 63, wherein the one or more service features are associated with one or more of following:
a terminal device of reduced capability;
small data transmission;
network slice access stratum grouping; or
message3 repetition of transmission.

65. The terminal device according to any one of claims 59 to 64, wherein the configuration information further comprises:
third configuration information, used to configure a correspondence between an SSB and a RACH resource, wherein in the third configuration information, quantities of RACH resources corresponding to different SSBs are the same.

66. The terminal device according to claim 65, wherein a RACH resource configured for the first configuration information is a first RACH resource, a RACH resource configured for the third configuration information is a second RACH resource, and the first RACH resource and the second RACH resource correspond to different random access channel occasions ROs.

67. The terminal device according to claim 65, wherein a RACH resource configured for the first configuration information is a first RACH resource, a RACH resource configured for the third configuration information is a second RACH resource, the first RACH resource comprises a first group of preambles in a first RO, and the second RACH comprises a second group of preambles in the first RO.

68. The terminal device according to claim 67, wherein the first RO comprises a third group of preambles, based on the third configuration information, the third group of preambles is used for non-contention random access, and the second group of preambles comprises part or all of preambles in the third group of preambles.

69. The terminal device according to any one of claims 65 to 68, wherein the third configuration information is used to configure one or more of following RACH resources:
a RACH resource corresponding to four-step random access;
a RACH resource corresponding to two-step random access; or
a RACH resource for one or more service features.

70. The terminal device according to any one of claims 59 to 69, wherein the second configuration information comprises a first parameter, and the first parameter is used to determine a density of a paging hyper frame in time domain.

71. The terminal device according to claim 70, wherein the first parameter is used to determine a quantity of hyper frames in an interval between two consecutive paging start locations.

72. The terminal device according to claim 71, wherein a paging hyper frame corresponding to one paging start location meets following formula:
H-SFN mod TeDRX_CN = (TeDRX_CN/X) * (UE_ID_H mod X), wherein H-SFN represents a frame number of a hyper frame, TeDRX_CN represents a period parameter of an extended discontinuous reception eDRX, X represents the first parameter, UE_ID_H represents identity-related information of the terminal device, and mod represents a remainder operation.

73. The terminal device according to any one of claims 70 to 72, wherein the second configuration information further comprises a second parameter, and the second parameter is used to determine a quantity of paging resources corresponding to one paging start location.

74. The terminal device according to claim 73, wherein the second parameter is used to determine a quantity of consecutive paging hyper frames corresponding to one paging start location.

75. The terminal device according to claim 74, wherein the consecutive paging hyper frames corresponding to one paging start location and a start location of a paging time window PTW in the consecutive paging hyper frames meet following formulas: $PH = ieDRX _ CN div 8 ;$ and 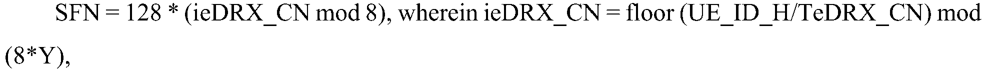 SFN = 128 * (ieDRX_CN mod 8), wherein ieDRX_CN = floor (UE_ID_H/TeDRX_CN) mod (8*Y), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, and Y represents the second parameter.

76. The terminal device according to claim 73, wherein the second parameter is used to determine a quantity of PTWs corresponding to one paging start location.

77. The terminal device according to claim 76, wherein consecutive paging hyper frames corresponding to one paging start location and a start location of a PTW in the consecutive paging hyper frames meet following formulas: $PH = ieDRX _ CN div 8 ;$ and 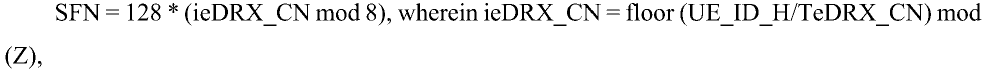 SFN = 128 * (ieDRX_CN mod 8), wherein ieDRX_CN = floor (UE_ID_H/TeDRX_CN) mod (Z), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, and Z represents the second parameter.

78. The terminal device according to any one of claims 70 to 77, wherein the second configuration information further comprises a third parameter, and the third parameter is used to determine an interval between two PTWs.

79. The terminal device according to claim 78, wherein consecutive paging hyper frames corresponding to one paging start location and a start location of a PTW in the consecutive paging hyper frames meet following formulas: $PH = ieDRX _ CN div \left(1024/W\right) ;$ and 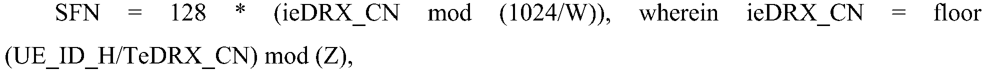 SFN = 128 * (ieDRX_CN mod (1024/W)), wherein ieDRX_CN = floor (UE_ID_H/TeDRX_CN) mod (Z), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, Z is used to determine a quantity of PTWs corresponding to one paging start location, and W represents the third parameter.

80. The terminal device according to any one of claims 59 to 79, wherein the second configuration information is used to configure a correspondence between an SSB and a paging resource, and in the second configuration information, quantities of paging resources corresponding to different SSBs are not exactly the same.

81. The terminal device according to claim 80, wherein the configuration information further comprises:
fourth configuration information, used to configure a correspondence between an SSB and a paging resource, and in the fourth configuration information, quantities of paging resources corresponding to different SSBs are the same.

82. The terminal device according to claim 81, wherein the second configuration information comprises a first offset, and based on the first offset, paging resources configured by the second configuration information and the fourth configuration information correspond to different paging occasions POs.

83. The terminal device according to claim 82, wherein a location of a PO corresponding to the paging resource configured by the second configuration information meets following formula:$i_s = floor \left(UE_ID/N\right) mod Ns + Offset 1 ,$ wherein UE_ID represents identity-related information of the terminal device, N represents a quantity of paging frames PFs comprised in a paging period, Ns represents a quantity of POs in a PF, Offset1 represents the first offset, i_s represents a parameter used to determine a PO, and floor represents a floor operation.

84. The terminal device according to any one of claims 81 to 83, wherein the second configuration information comprises a second offset, and based on the second offset, paging resources configured by the second configuration information and the fourth configuration information correspond to different PTWs; or
the second configuration information comprises a third offset, and based on the third offset, paging resources configured by the second configuration information and the fourth configuration information correspond to different paging monitoring occasions.

85. The terminal device according to claim 26, wherein a location of a PTW corresponding to the paging resource meets following formula: $SFN = \left(128*ieDRX_CN+Offset2\right) mod 1024 ;$ or $SFN = \left(128*\left(ieDRX_CN mod 8\right)+Offset2\right) mod 1024 ;$ or $SFN = \left(W*\left(ieDRX_CN mod\left(1024/W\right)\right)+Offset2\right) mod 1024 ,$ wherein SFN represents a start location of the PTW, ieDRX_CN represents a parameter determined based on a period parameter of eDRX, mod represents a remainder operation, Offset2 represents the second offset, and W is used to determine an interval between two PTWs.

86. The terminal device according to any one of claims 59 to 85, wherein the paging resource comprises a paging monitoring occasion.

87. The terminal device according to any one of claims 59 to 86, wherein the SSBs correspond to different transmission directions.

88. A network device, comprising:
a communications unit, configured to transmit configuration information to a terminal device, wherein the configuration information comprises one or more of following:
first configuration information, used to configure a correspondence between a synchronization signal block SSB and a random access channel RACH resource, wherein in the first configuration information, quantities of RACH resources corresponding to different SSBs are not exactly the same; or
second configuration information, used to configure a paging resource.

89. The network device according to claim 88, wherein the RACH resource comprises one or more of following parameters:
a RACH resource;
a RACH resource set;
a RACH time-frequency resource;
a RACH time-frequency resource set; or
a preamble.

90. The network device according to claim 89, wherein the first configuration information is used to configure one or more of following corresponding to the SSB:
a quantity of RACH resources;
a start index of a RACH resource; or
an end index of a RACH resource.

91. The network device according to claim 89 or 90, wherein the RACH resource corresponds to one preamble in a time-frequency resource.

92. The network device according to any one of claims 88 to 91, wherein the first configuration information is further used to configure a correspondence between the RACH resource and one or more service features.

93. The network device according to claim 92, wherein the one or more service features are associated with one or more of following:
a terminal device of reduced capability;
small data transmission;
network slice access stratum grouping; or
message3 repetition of transmission.

94. The network device according to any one of claims 88 to 93, wherein the configuration information further comprises:
third configuration information, used to configure a correspondence between an SSB and a RACH resource, wherein in the third configuration information, quantities of RACH resources corresponding to different SSBs are the same.

95. The network device according to claim 94, wherein a RACH resource configured for the first configuration information is a first RACH resource, a RACH resource configured for the third configuration information is a second RACH resource, and the first RACH resource and the second RACH resource correspond to different random access channel occasions ROs.

96. The network device according to claim 94, wherein a RACH resource configured for the first configuration information is a first RACH resource, a RACH resource configured for the third configuration information is a second RACH resource, the first RACH resource comprises a first group of preambles in a first RO, and the second RACH comprises a second group of preambles in the first RO.

97. The network device according to claim 96, wherein the first RO comprises a third group of preambles, based on the third configuration information, the third group of preambles is used for non-contention random access, and the second group of preambles comprises part or all of preambles in the third group of preambles.

98. The network device according to any one of claims 94 to 97, wherein the third configuration information is used to configure one or more of following RACH resources:
a RACH resource corresponding to four-step random access;
a RACH resource corresponding to two-step random access; or
a RACH resource for one or more service features.

99. The network device according to any one of claims 88 to 98, wherein the second configuration information comprises a first parameter, and the first parameter is used to determine a density of a paging hyper frame in time domain.

100. The network device according to claim 99, wherein the first parameter is used to determine a quantity of hyper frames in an interval between two consecutive paging start locations.

101. The network device according to claim 100, wherein a paging hyper frame corresponding to one paging start location meets following formula:
H-SFN mod TeDRX_CN = (TeDRX_CN/X) * (UE_ID_H mod X), wherein H-SFN represents a frame number of a hyper frame, TeDRX_CN represents a period parameter of an extended discontinuous reception eDRX, X represents the first parameter, UE_ID_H represents identity-related information of the terminal device, and mod represents a remainder operation.

102. The network device according to any one of claims 99 to 101, wherein the second configuration information further comprises a second parameter, and the second parameter is used to determine a quantity of paging resources corresponding to one paging start location.

103. The network device according to claim 102, wherein the second parameter is used to determine a quantity of consecutive paging hyper frames corresponding to one paging start location.

104. The network device according to claim 103, wherein the consecutive paging hyper frames corresponding to one paging start location and a start location of a paging time window PTW in the consecutive paging hyper frames meet following formulas: $PH = ieDRX _ CN div 8 ;$ and 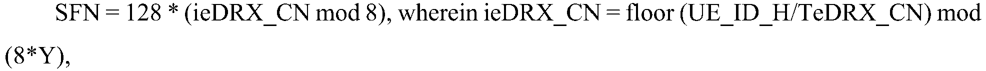 SFN = 128 * (ieDRX_CN mod 8), wherein ieDRX_CN = floor (UE_ID_H/TeDRX_CN) mod (8*Y), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, and Y represents the second parameter.

105. The network device according to claim 102, wherein the second parameter is used to determine a quantity of PTWs corresponding to one paging start location.

106. The network device according to claim 105, wherein consecutive paging hyper frames corresponding to one paging start location and a start location of a PTW in the consecutive paging hyper frames meet following formulas: $PH = ieDRX _ CN div 8 ;$ and 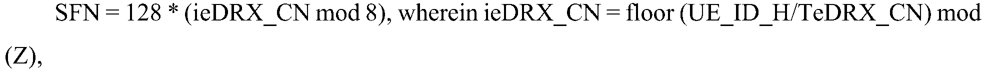 SFN = 128 * (ieDRX_CN mod 8), wherein ieDRX_CN = floor (UE_ID_H/TeDRX_CN) mod (Z), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, and Z represents the second parameter.

107. The network device according to any one of claims 99 to 106, wherein the second configuration information further comprises a third parameter, and the third parameter is used to determine an interval between two PTWs.

108. The network device according to claim 107, wherein consecutive paging hyper frames corresponding to one paging start location and a start location of a PTW in the consecutive paging hyper frames meet following formulas: $PH = ieDRX _ CN div \left(1024/W\right) ;$ and 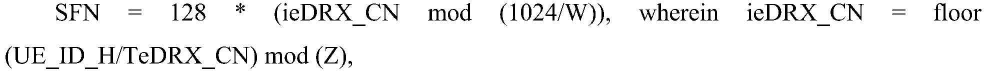 SFN = 128 * (ieDRX_CN mod (1024/W)), wherein ieDRX_CN = floor (UE_ID_H/TeDRX_CN) mod (Z), wherein PH represents an offset relative to one paging start location, SFN represents a start location of a PTW, TeDRX_CN represents a period parameter of eDRX, UE_ID_H represents identity-related information of the terminal device, mod represents a remainder operation, floor represents a floor operation, div represents a division operation, Z is used to determine a quantity of PTWs corresponding to one paging start location, and W represents the third parameter.

109. The network device according to any one of claims 88 to 108, wherein the second configuration information is used to configure a correspondence between an SSB and a paging resource, and in the second configuration information, quantities of paging resources corresponding to different SSBs are not exactly the same.

110. The network device according to claim 109, wherein the configuration information further comprises:
fourth configuration information, used to configure a correspondence between an SSB and a paging resource, and in the fourth configuration information, quantities of paging resources corresponding to different SSBs are the same.

111. The network device according to claim 110, wherein the second configuration information comprises a first offset, and based on the first offset, paging resources configured by the second configuration information and the fourth configuration information correspond to different paging occasions POs.

112. The network device according to claim 111, wherein a location of a PO corresponding to the paging resource configured by the second configuration information meets following formula: $i_s = floor \left(UE_ID/N\right) mod Ns + Offset 1 .$ wherein UE_ID represents identity-related information of the terminal device, N represents a quantity of paging frames PFs comprised in a paging period, Ns represents a quantity of POs in a PF, Offset1 represents the first offset, i_s represents a parameter used to determine a PO, and floor represents a floor operation.

113. The network device according to any one of claims 110 to 112, wherein the second configuration information comprises a second offset, and based on the second offset, paging resources configured by the second configuration information and the fourth configuration information correspond to different PTWs; or
the second configuration information comprises a third offset, and based on the third offset, paging resources configured by the second configuration information and the fourth configuration information correspond to different paging monitoring occasions.

114. The network device according to claim 113, wherein a location of a PTW corresponding to the paging resource meets following formula: $SFN = \left(128*ieDRX_CN+Offset2\right) mod 1024 ;$ or $SFN = \left(128*\left(ieDRX_CN mod 8\right)+Offset2\right) mod 1024 ;$ or $SFN = \left(W*\left(ieDRX_CN mod\left(1024/W\right)\right)+Offset2\right) mod 1024 ,$ wherein SFN represents a start location of the PTW, ieDRX_CN represents a parameter determined based on a period parameter of eDRX, mod represents a remainder operation, Offset2 represents the second offset, and W is used to determine an interval between two PTWs.

115. The network device according to any one of claims 88 to 114, wherein the paging resource comprises a paging monitoring occasion.

116. The network device according to any one of claims 88 to 115, wherein the SSBs correspond to different transmission directions.

117. A terminal device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 1 to 29.

118. A network device, comprising a transceiver, a memory, and a processor, wherein the memory is configured to store a program, and the processor is configured to invoke the program in the memory, and control the transceiver to receive or transmit a signal, to cause the communications device to execute the method according to any one of claims 30 to 58.

119. An apparatus, comprising a processor, configured to invoke a program from a memory, to cause the apparatus to execute the method according to any one of claims 1 to 29 or claims 30 to 58.

120. A chip, comprising a processor, configured to invoke a program from a memory, to cause a device installed with the chip to execute the method according to any one of claims 1 to 29 or claims 30 to 58.

121. A computer-readable storage medium, storing a program, wherein the program causes a computer to execute the method according to any one of claims 1 to 29 or claims 30 to 58.

122. A computer program product, comprising a program, wherein the program causes a computer to execute the method according to any one of claims 1 to 29 or claims 30 to 58.

123. A computer program, wherein the computer program causes a computer to execute the method according to any one of claims 1 to 29 or claims 30 to 58.
